# EUROPEAN PATENT APPLICATION

(11) **EP 2 827 536 A1**
(43) Date of publication of application: **21.01.2015**
(21) Application number: 12870971.4
(22) Date of filing: 15.03.2012
(51) Int. Cl.: H04L 12/28

(54) **COMMUNICATION APPARATUS AND COMMUNICATION METHOD**

(71) Applicant: TOYOTA JIDOSHA KABUSHIKI KAISHA, Toyota-shi, Aichi-ken, 471-8571 (JP)
(72) Inventor: MORIYA, Tomokazu, Toyota-shi Aichi-ken 471-8571 (JP)
(74) Representative: Winter, Brandl, Fürniss, Hübner, Röss, Kaiser, Polte - Partnerschaft mbB
(86) International application number: PCT/JP2012/056765
(87) International publication number: WO 2013/136496

(57) **Abstract**

A communication apparatus and a communication method are provided in which the transmission of communication messages can be easily restricted in accordance with the communication load of a network. A CAN controller (12), which is connected to a communication bus (50) constituting a network mounted on a vehicle, transmits and receives communication messages to and from the network. The CAN controller (12) includes a bus load measuring section (125) that calculates a bus load factor of the network on the basis of receiving communication messages flowing through the network during a measurement period (G) established for a bus load factor calculation. Further, the bus load measuring section (125) determines, on the basis of the calculated bus load factor, whether the load of the network is high or low. The CAN controller (12) also includes a CAN protocol engine (122) that autonomously restricts the transmission of communication messages on the basis of a result of the determination by the bus load measuring section (125) to the effect that the load is high.

## Description

### TECHNICAL FIELD

The present invention relates to a communication apparatus that is connected to a network in a vehicle or the like, and to a communication method.

### BACKGROUND ART

As is well known, in many cases, a plurality of electronic control units (ECUs) mounted in a vehicle configure a vehicle network system, where the ECUs are connected to a network and pieces of information (vehicle information) held by the ECUs are allowed to be communicated with one another. A controller area network (CAN) is known as a communication system configuring such a vehicle network system.

According to such a vehicle network system, when the number of ECUs mounted in a vehicle increases, the data traffic of the network to which the ECUs are connected spontaneously increases. Moreover, such increase in the data traffic of the network may negatively affect the entire system, i.e., such increase may increase collision of communication data or increase a delay in data transfer. Accordingly, a technique of suppressing the data traffic of a network is conventionally proposed, and an example of such a technique is described in Patent Document 1.

A communication system described in Patent Document 1 is provided with a communication management device for detecting a transmission cycle of data transmitted through a communication line of an in-vehicle network, and managing the data traffic in such a way as to reduce the data traffic through the communication line on the basis of the standard deviation calculated from the transmission cycle. According to this communication management device, a priority of an ECU connected to the in-vehicle network is set for each ECU. If the calculated standard deviation is equal to or above a predetermined value, the communication management device suppresses the traffic of data that is transmitted to the communication line by stopping the transmission of periodic frames from an ECU with a low priority or by extending the transmission cycle of periodic frames, for example. Accordingly, an increase in the traffic in the in-vehicle network is suppressed, and the collision of data, the data delay and the like are reduced.

### PRIOR ART DOCUMENTS

### Patent Document

Patent Document 1: Japanese Laid-Open Patent Publication No. 2010-28355

### SUMMARY OF THE INVENTION

### Problems that the Invention is to Solve

Meanwhile, in recent years, the number of ECUs connected to an in-vehicle network has further increased, and accordingly, it has become difficult to grasp all the messages transmitted from the ECUs connected to the in-vehicle network. Therefore, with the device described in Patent Document 1, the time and burden for setting the priority on each ECU to be set in the communication management device or for setting the transmission cycle of periodic frames cannot be disregarded. Furthermore, there is an inconvenience that, if messages transmitted from the ECUs include messages with a high priority, the priority of this ECU cannot be reduced, and transmission of messages from this ECU cannot be restricted. In this case, it is conceivable to set the priority not based on each ECU, but based on each data frame (each message ID), but then, the number of targets on which the priorities have to be set increases, and the time and burden required for the setting inevitably increase.

Such a problem is present not only for the ECUs mounted in a vehicle, but also for most of various communication apparatuses that perform network communication. Moreover, such a problem is present not only for the CAN mounted in a vehicle, but also for most of various networks used for network communication.

Accordingly, it is an objective of the present invention to provide a communication apparatus and a communication method capable of easily realizing transmission restriction of communication messages according to the communication load of a network. Means for Solving the Problems

Means for achieving the above objective and advantages thereof will now be discussed.

To achieve the foregoing objective, the present invention provides a communication apparatus that is connected to an on-vehicle network and performs transmission and reception of a communication message to and from the network. The communication apparatus includes a load measuring section, a load determining section, and a transmitting section. The load measuring section calculates a load factor of the network based on reception of the communication message flowing through the network during a measurement period set for calculation of the load factor. The load determining section determines a level of a load of the network based on the load factor calculated by the load measuring section. The transmitting section is adapted to autonomously restrict the transmission of the communication message based on a determination result of the load determining section indicating a high load.

To achieve the foregoing objective, the present invention also provides a communication method for performing transmission and reception of a communication message to and from an on-vehicle network. The communication method includes: a load measurement step for calculating a load factor of the network based on reception of the communication message flowing through the network during a measurement period set for calculation of the load factor; a load determination step for determining a level of a load of the network based on the calculated load factor; and a transmission step for restricting the transmission of the communication message based on a determination result of the load determination step indicating a high load.

According to such a configuration or method, transmission of communication messages is restricted based on the load factor of the network in the measurement period. That is, the communication apparatus can perform transmission restriction of restricting the transmission of the communication message when the load factor of the network is high, and not restricting the transmission of the communication message when the load factor of the network is low, for example. Thus, by suppressing an increase in the traffic in an on-vehicle network, data collision, data delay and the like in the network are reduced. That is, appropriate transmission restriction for the communication message in accordance with the communication load of the network is easily performed.

Moreover, since the communication restriction is set for each communication apparatus, messages that are the targets of restriction can be easily grasped, and also, communication restriction can be performed without taking into account the content of messages that are transmitted from other communication apparatuses. Accordingly, the time and burden required for communication restriction are reduced.

Furthermore, since the communication restriction is performed separately for the communication apparatuses, the influence of the communication restriction on other communication apparatuses and the network is minimized. Thus, it is easy to apply the communication device to existing communication apparatuses, and the existing communication apparatuses and networks are not likely to be complicated and the costs thereof are not likely to be increased.

Moreover, by changing the setting of the unit of the measurement period used for calculation of the load factor, a state where communication messages that are the targets of transmission restriction are appropriately transmitted can be selected while the communication load suitable for the network is maintained.

As a preferred configuration, in the above described communication apparatus, the load measuring section is adapted to accumulate time during which the communication message flows through the network and calculate a ratio of the accumulated time to the measurement period as the load factor of the network.

As a preferred method, in the above described communication method, the load measurement step includes accumulating time during which the communication message flows through the network and calculating a ratio of the accumulated time to the measurement period as the load factor of the network.

According to such a configuration or method, the load factor of a measurement period is calculated based on the accumulated time during which the communication message flows through. Accordingly, the level of transmission restriction for the communication message can be adjusted to be suitable for the state of the communication load of the network by selection of a measurement period.

As a preferred configuration in the above described communication apparatus, the load measuring section starts the accumulation of the time during which the communication message flows from zero each time the measurement period starts.

As a preferred method, in the above described communication method, the load measurement step includes starting the accumulation of the time during which the communication message flows from zero each time the measurement period starts.

According to such a configuration or method, the time during which the communication message flows through is accumulated from zero for each measurement period, and thus, the load factor is calculated in such a way as to be increased from zero in the measurement period. Accordingly, a state where the load factor is low, including zero, is surely provided in the measurement period, and there is timing within the measurement period when transmission restriction is not performed. Thus, since there is timing where transmission restriction is not performed even for a communication message that is the target of transmission restriction, the influence of transmission restriction on communication messages that are targets of transmission restriction can be suppressed to a low level.

As a preferred configuration, in the above described communication apparatus, a message of high importance and a message of low importance are each set as the communication message in the transmitting section, and the transmitting section is adapted to autonomously restrict the transmission of the message of low importance.

As a preferred method, in the above described communication method, a message of high importance and a message of low importance are each set as the communication message, and the transmission step includes restricting the transmission of the message of low importance of the message of high importance and the message of low importance.

According to such a configuration or method, by setting the importance to various communication messages to be transmitted by the ECUs on a message-by-message basis, whether a communication message is a target of transmission restriction or not can be determined for each communication message. According to the CAN protocol, the priority of a communication message is specified based on a message ID, but an ID with a low priority is possibly attached to a communication message of high importance depending on the design of the communication system or the like. For example, a communication apparatus that is added to an existing communication system does not have much flexibility regarding ID attachment; for example, a message ID that is already used cannot be used. Even in such a case, with the present ECU, transmission control is performed based on the importance set for the communication message, and the possibility of a communication message of high importance being transmitted is increased.

As a preferred configuration, in the above described communication apparatus, a determination threshold is set in the load determining section, and the load determining section determines that a communication load of the network is high if the load factor is equal to or above the determination threshold, and determines that the communication load of the network is low if the load factor is below the determination threshold.

As a preferred method, in the above described communication method, a determination threshold is set for the load determination step, and the load determination step includes determining that a communication load of the network is high if the load factor is equal to or above the determination threshold, and determining that the communication load of the network is low if the load factor is below the determination threshold.

According to such a configuration or method, the level of the load is calculated based on the comparison between the load factor and the determination threshold. That is, the determination threshold can be set based on the load factor, and thus, such setting is facilitated.

As a preferred configuration, in the above described communication apparatus, the measurement period is between 5 milliseconds (ms) and 1 second (s).

According to such a configuration, there is a high degree of flexibility in setting a measurement period, that is, there is a high degree of flexibility in calculating the load factor. Accordingly, a measurement period that is suitable for the load state of the communication network and the mode of the communication message, which is a restriction target, can be set.

In a preferred configuration, in the above described communication apparatus, the network is a controller area network.

According to such a configuration, by applying such a communication restriction to a controller area network (CAN) often mounted in the vehicle, an increase in the communication messages is suppressed. Accordingly, the communication state of the network system of the vehicle or the like can be suitably maintained, and the entire system can be prevented from being negatively affected.

### BRIEF DESCRIPTION OF THE DRAWINGS

Fig. 1 is a block diagram showing a schematic configuration of a communication system including a communication apparatus according to one embodiment of the present invention;
Fig. 2 is a block diagram showing a schematic configuration of the communication apparatus shown in Fig. 1;
Fig. 3 is a schematic diagram for describing the principle of bus load measurement by the communication apparatus shown in Fig. 1;
Fig. 4 is a flowchart showing an initial setting procedure for bus load measurement by the communication apparatus shown in Fig. 1;
Fig. 5 is a schematic diagram for describing a mode of bus load measurement by the communication apparatus shown in Fig. 1;
Fig. 6 is a schematic diagram showing a mode of control of transmission by the communication apparatus shown in Fig. 1 according to a bus load;
Fig. 7 is a block diagram showing a schematic configuration of an embodiment of an electronic control unit provided to the communication apparatus according to the present invention; and
Fig. 8 is a schematic diagram schematically showing a mode of transmission restriction according to an embodiment of the communication apparatus according to the present invention.

### MODES FOR CARRYING OUT THE INVENTION

A communication system including a communication apparatus according to one embodiment of the present invention will be described with reference to the drawings.

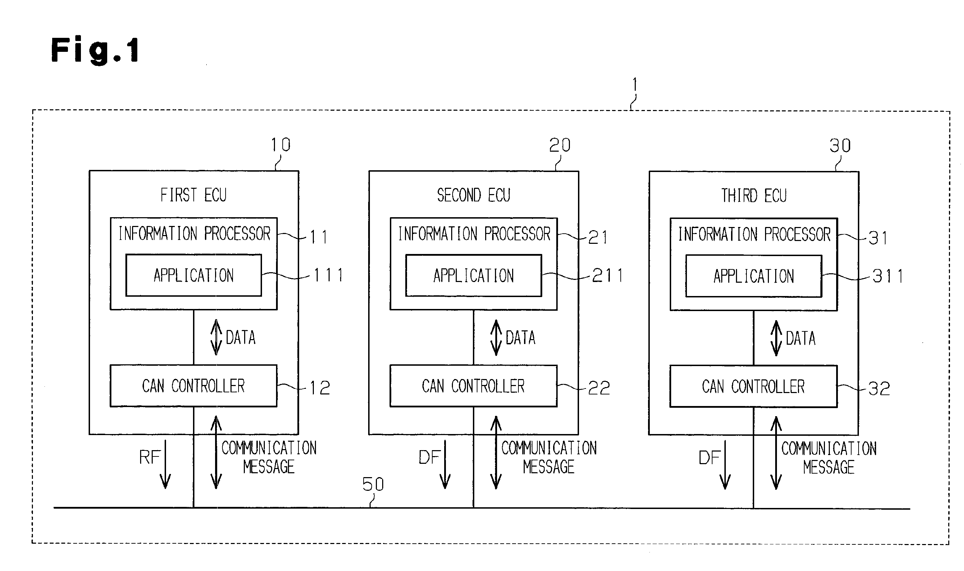

As shown in Fig. 1, a vehicle 1 includes a communication system as a vehicle network system. The communication system is configured of a first electronic control unit (ECU) 10, a second ECU 20, a third ECU 30, and a communication bus 50 for connecting the first to the third ECUs 10, 20 and 30 in a manner capable of communicating with one another. The first to the third ECUs 10, 20 and 30 are thereby enabled to exchange (transmit and receive) various pieces of information used for control with one another via the communication bus 50. The communication system is configured as a CAN (Control Area Network) network, and thus, a CAN protocol is adopted as a communication protocol.

Each of the first to the third ECUs 10, 20 and 30 is a control device to be used for various control of the vehicle 1, and is an ECU that controls a driving system, a travelling system, a vehicle body system, an information appliance system or the like, for example. For example, as an ECU that controls a driving system, an ECU for an engine may be used. As an ECU that controls a travelling system, an ECU for steering or an ECU for brakes may be used. As an ECU for controlling the vehicle body system, an ECU for lights or an ECU for windows may be used as an ECU that controls an information appliance system, an ECU for car navigation may be used.

The first ECU 10 is provided with an information processor 11 for performing processes necessary for various control, and a CAN controller 12 as a communication apparatus for transmitting and receiving communication messages based on the CAN protocol. Since the information processor 11 and the CAN controller 12 are connected via an internal bus or the like, the information processor 11 and the CAN controller 12 are capable of exchanging various types of data.

Moreover, the second and the third ECUs 20 and 30 are configured in the same manner as the first ECU 10. That is, the second ECU 20 includes an information processor 21 having the same function as that of the information processor 11 of the first ECU 10, and a CAN controller 22 as a communication apparatus having the same function as that of the CAN controller 12 of the first ECU 10. The third ECU 30 includes an information processor 31 having the same function as that of the information processor 11 of the first ECU 10, and a CAN controller 32 as a communication apparatus having the same function as that of the CAN controller 12 of the first ECU 10.

That is, the CAN controllers 12, 22 and 32 of the first to the third ECUs 10, 20 and 30 are connected to one communication bus 50. The communication bus 50 is configured of a communication line or the like that is capable of transferring communication messages based on the CAN protocol. The communication bus 50 may cover wireless communication at a part of a communication channel, or may include a channel that passes through another network via a gateway or the like, for example. Each of the CAN controllers 12, 22 and 32 can thereby transmit communication messages RF and DF and the like to the communication bus 50, and receive communication messages RF and DF and the like which have been transmitted to the communication bus 50. That is, each of the CAN controllers 12, 22 and 32 is capable of transmitting and receiving to and from one another, via the communication bus 50, communication messages RF and DF and the like based on frames specified by the CAN protocol.

The first ECU 10 provides a predetermined control function by executing an application (an application program) 111 for providing the predetermined control function by the information processor 11. Also, the second ECU 20 provides a predetermined control function by executing an application 211 by the information processor 21. Moreover, the third ECU 30 provides a predetermined control function by executing an application 311 by the information processor 31.

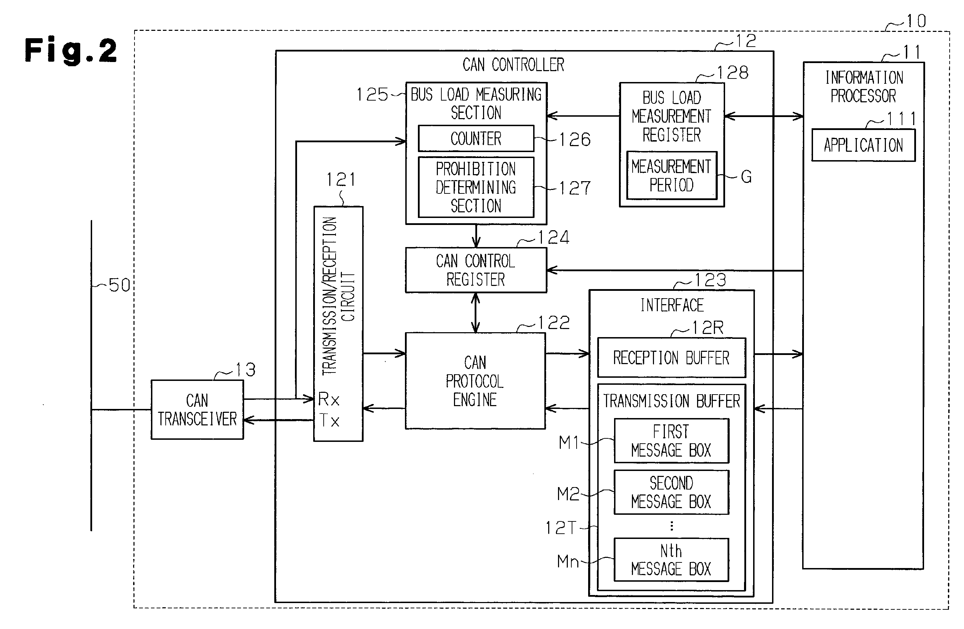

Next, referring to Fig. 2, the configuration of the first ECU 10 will be described in detail. The configurations of the second and the third ECUs 20 and 30 are the same as that of the first ECU 10, and description thereof is omitted.

As shown in Fig. 2, the first ECU 10 includes a CAN transceiver 13 between the CAN controller 12 and the communication bus 50, and communication between the CAN controller 12 and the communication bus 50 is performed via the CAN transceiver 13. The CAN transceiver 13 is electrically connected to the CAN controller 12, and also to the communication bus 50. The CAN transceiver 13 enables bidirectional transfer of communication messages between the communication bus 50 and the CAN controller 12 by converting the electrical properties between the communication bus 50 and the CAN controller 12. For example, recognition of dominant (0) and recessive (1) is enabled by conversion of a signal at a bus level of the communication bus 50 into a digital signal that can be handled by the CAN controller 12. That is, the CAN controller 12 is allowed to transmit and receive communication messages to and from the communication bus 50 by being connected to the communication bus 50 via the CAN transceiver 13.

The information processor 11 is configured by including a microcomputer including an arithmetic device (CPU) and a storage device. That is, the information processor 11 is provided with an arithmetic device for performing arithmetic processing of a control program, a read-only memory (ROM) for storing the control program, data and the like, and a volatile memory (RAM) for temporarily storing the result of arithmetic processing by the arithmetic device. Accordingly, the information processor 11 reads the control program (the application 111) held in the storage device into the arithmetic device and executes the same to thereby apply the function of the application 111 to a control target and to control the control target. The application 111 is used for processing by obtaining information transmitted to the communication bus 50 from another ECU 20 or 30, or used by other ECUs 20 and 30 by calculated information or the like being transmitted to the communication bus 50.

The CAN controller 12 is provided with a transmission/reception circuit 121 for transmitting and receiving communication messages to and from the communication bus 50, and an interface 123 used for exchange of various types of data regarding communication messages with the information processor 11. Also, the CAN controller 12 is provided with a CAN protocol engine 122 for analyzing a received communication message based on the CAN protocol, and for configuring a transmitting section for generating a communication message to be transmitted, based on the CAN protocol. Moreover, the CAN controller 12 is provided with a CAN control register 124, in which various parameters to be used by the CAN protocol engine 122 to perform analysis or generation of communication messages are set.

The transmission/reception circuit 121 is a circuit for performing basic processes related to transmission/reception of communication messages with the communication bus 50, and performs detection of a communication error regarding a received communication message, determination of whether or not a communication message can be transmitted to the communication bus 50, and the like. The transmission/reception circuit 121 receives a communication message received by the CAN transceiver 13 from communication bus 50 at a reception port Rx, and also, outputs the communication message to the CAN protocol engine 122 after performing a basic process related to reception on the communication message. Also, the transmission/reception circuit 121 monitors whether or not the communication bus 50 is in a state where transmission of a communication message is allowed. Then, when it is detected that a communication message can be transmitted to the communication bus 50, the transmission/reception circuit 121 notifies the CAN protocol engine 122 of the detection result, and outputs a communication message input from the CAN protocol engine 122 from a transmission port Tx according to the notification. A communication message is thereby transmitted to the communication bus 50 via the CAN transceiver 13.

The interface 123 is provided with a reception buffer 12R and a transmission buffer 12T configured of a readable/writable memory area. The reception buffer 12R is an area where writing by the CAN protocol engine 122 and reading by the information processor 11 are possible. The transmission buffer 12T is an area where writing by the information processor 11 and reading by the CAN protocol engine 122 are possible. The reception buffer 12R and the transmission buffer 12T may share a predetermined memory area, or memory areas may be separately secured.

The reception buffer 12R is provided with one or more message boxes (not shown), and a communication message that has been received is stored in a message box corresponding to the communication message. Also, the transmission buffer 12T is provided with first to nth (n: integer) message boxes M1 to Mn, and data transmitted from the information processor 11 is stored in a message box corresponding to the data among the message boxes M1 to Mn. In the present embodiment, the message boxes M1 to Mn are associated with different message IDs, and thus, the content of information to be transmitted is fixed for each of the message boxes M1 to Mn. For example, if the first ECU 10 is an ECU for an engine, the engine speed is set for the first message box M1 as particularly important information, and water temperature is set for the second message box M2 as information with a slightly lower priority. Also, for example, if the first ECU 10 is an ECU for an information processing system, audio information is set for the first message box M1 as particularly important information, and image information is set for the second message box M2 as information with a slightly lower priority.

The CAN protocol engine 122 performs analysis or generation of communication messages based on the CAN protocol. That is, the CAN protocol engine 122 analyzes a communication message input from the transmission/reception circuit 121 based on the CAN protocol. Also, when data to be transmitted is input from each of the message boxes M1 to Mn of the interface 123, the CAN protocol engine 122 generates a communication message including the data to be transmitted based on the CAN protocol, and outputs the communication message to the transmission/reception circuit 121.

The CAN protocol engine 122 refers to the CAN control register 124 at the time of the process of analysis or generation of a communication message.

Various parameters related to analysis of a communication message and various parameters related to generation of a communication message are set in the CAN control register 124. The CAN control register 124 is capable of writing or reading data with the information processor 11. Setting of various parameters in the CAN control register 124 is performed by the application 111 that is processed by the information processor 11 as necessary, for example, at a time of activation of the first ECU 10. Also, the CAN control register 124 is provided with transmission request flag setting bits respectively corresponding to the first to the nth message boxes M1 to Mn. When transmission of a communication message based on the corresponding message box among the first to the nth message boxes M1 to Mn is requested, a transmission request flag, for example, 1, is set in the transmission request flag setting bit of the CAN control register 124. Also, when transmission of a communication message from the corresponding message box among the first to the nth message boxes M1 to Mn is not requested, a transmission stop flag, for example, 0, is set in the transmission request flag setting bit of the CAN control register 124. Then, the CAN protocol engine 122 does not transmit communication messages that are generated based on the first to the nth message boxes M1 to Mn when the transmission stop flags 0 are set in the transmission request flag setting bits corresponding to the respective message boxes M1 to Mn, and transmits the communication messages when the transmission request flags 1 are set in the corresponding transmission request flag setting bits. That is, even if data to be transmitted is set in the first to the nth message boxes M1 to Mn, or the communication bus 50 is in a state allowing transmission, the CAN protocol engine 122 stops or performs transmission of a communication message according to the transmission stop flag 0 or the transmission request flag 1 that is set in the transmission request flag setting bit. With respect to the transmission request flag setting bit, even if the transmission request flag 1 is set at the time the flag is referred to by the CAN protocol engine 122, the value that is referred to can be read as 0, that is, so-called masking can be performed.

Moreover, the CAN control register 124 is provided with importance flag setting bits corresponding to the first to the nth message boxes M1 to Mn. A flag indicating a high importance, for example, 1, is set in the importance flag setting bit of the CAN control register 124 when the importance of a communication message to be transmitted generated from the corresponding message box among the first to the nth message boxes M1 to Mn is high. On the other hand, a flag indicating a low importance, for example, 0, is set in the importance flag setting bit when the importance of a communication message to be transmitted generated from the corresponding message box among the first to the nth message boxes M1 to Mn is low. In the present embodiment, 1 indicating that the importance is high is set in the importance flag setting bit corresponding to the first message box M1 while 0 indicating that the importance is low is set in the importance flag setting bits corresponding to the second to the nth message boxes M2 to Mn.

Furthermore, the CAN controller 12 is provided with a bus load measuring section 125 as a load measuring section for measuring the bus load factor of the communication bus 50, which also configures a transmitting section, and a bus load measurement register 128 in which parameters to be used by the bus load measuring section 125 are set.

A measurement period G, which is a period during which the bus load factor is measured, and an upper limit value Tup as a determination threshold for determining the level of the bus load factor are set in the bus load measurement register 128. The measurement period G is a period for calculation of the bus load factor, and is set within a range of 5 milliseconds (ms) to 1 second (s), for example, but the period may be shorter than 5 ms or longer than 1 s. The upper limit value Tup is a value that is compared with the bus load factor, and is a value that is set within the range of 0 to 100%, and 50% is set, for example. The measurement period G and the upper limit value Tup are set to values within ranges that do not cause problems for the communication system.

The bus load measuring section 125 measures the bus load factor of the communication bus 50 in real time (a load measurement step). Since the bus load measuring section 125 is connected to the CAN transceiver 13, a digital signal that is output from the CAN transceiver 13 to the CAN controller 12, that is, a signal corresponding to the communication message flowing through the communication bus 50, is input thereto. The bus load measuring section 125 refers to various parameters set in the bus load measurement register 128 at the time of measuring the bus load factor.

The bus load measuring section 125 is provided with a counter 126 for measuring the time when a communication message is flowing through the communication bus 50, and a prohibition determining section 127 as a load determining section for determining transmission prohibition based on the bus load factor.

The counter 126 measures the time during which a communication message is flowing through the communication bus 50, that is, the time during which a communication message is occupying the communication bus 50. The counter 126 accumulates, with respect to communication messages to be input to the bus load measuring section 125, the time during which these communication messages are being received, for each measurement period G set in the bus load measurement register 128. That is, when a measurement period G starts, the counter 126 returns the accumulated time to zero, and then, restarts accumulation of the time during which communication messages are flowing through. The bus load measuring section 125 thereby calculates the ratio of the time accumulated by the counter 126 to a measurement period G as the bus load factor of the measurement period G.

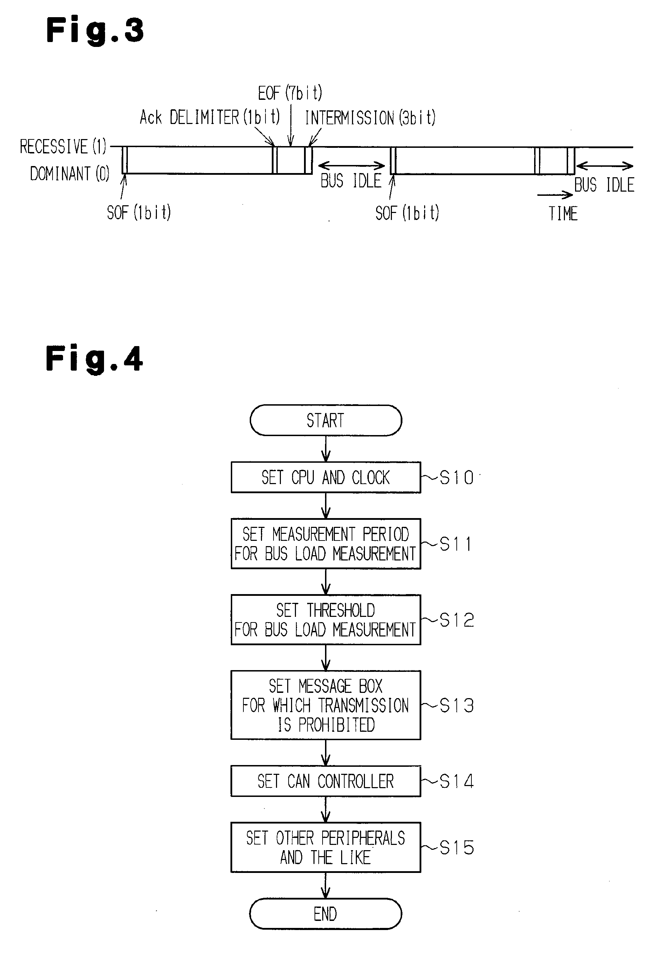

Referring to Fig. 3, accumulation of time during which communication messages are flowing will be described. The CAN protocol specifies four types of frames, such as a data frame and a remote frame, as a frame that is one unit of communication, and measurement of the time during which a communication message is flowing may be performed in the same way for all the frames. Accordingly, in the following, a case of a data frame will be described, and description for other frames will be omitted.

As shown in Fig. 3, a communication message having the structure of a data frame is started from a 1 dominant bit (0), which is the start of frame (SOF), and ends with 11 recessive bits (1). That is, the counter 126 can detect the start of a communication message by the SOF, and can detect the end of the communication message by the 11 recessive bits. The 11 recessive bits include an Ack delimiter (1 bit), an EOF (7 bits), and an intermission (3 bits). The counter 126 accumulates the time from the start to the end of a communication message, that is, the time during which the communication message occupies the communication bus 50. On the other hand, the counter 126 does not accumulate time of so-called bus idle periods, which are the time periods from the end of a communication message to the start of the next communication message.

Then, the bus load measuring section 125 calculates, as the bus load factor (%), the ratio (percentage) of the time accumulated by the counter 126 to the measurement period G, that is, "accumulated time/measurement period G x 100". Since the measurement period G can be arbitrarily set in the bus load measurement register 128, calculation of the bus load factor can be adjusted according to the state of the communication system, the communication bus 50 or each of the ECUs 10, 20 and 30. Also, since the value of the counter 126 is made zero, i.e. cleared, for each measurement period G, the bus load factor is 0% at the start of a measurement period G, and changes to increase with the lapse of time.

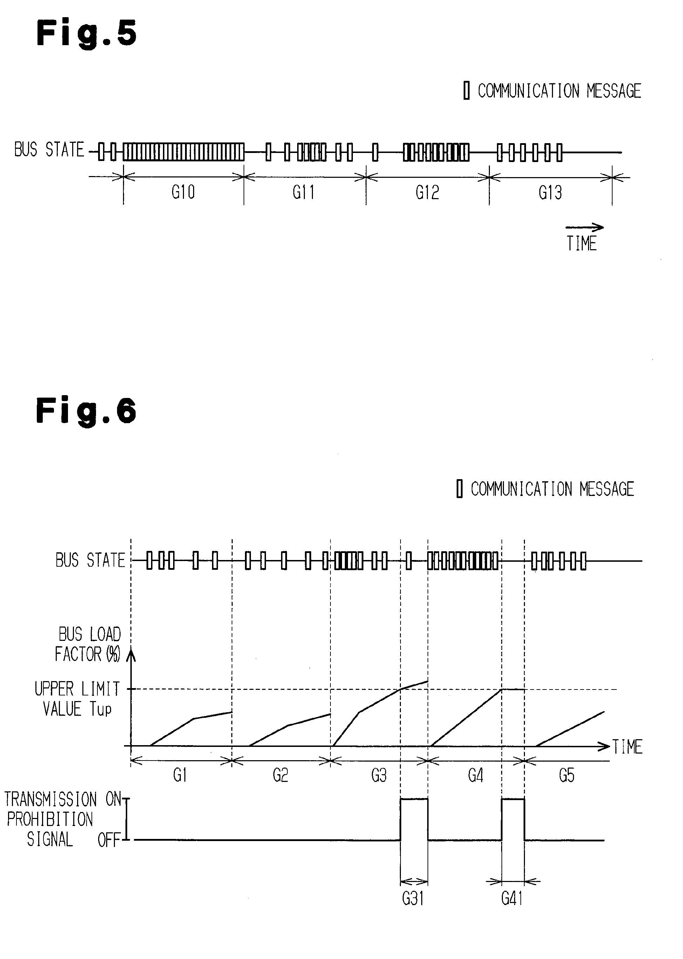

For example, as shown in Fig. 5, with the bus load measuring section 125, the time accumulated by the counter 126 is cleared to zero each time a measurement period, G10 to G13, is started. Accordingly, in the measurement period G10 where communication messages are continuously transmitted to the communication bus 50, the load factor is 0% at the start of the period, the load factor is 50% in the middle of the period, and the load factor is 100% at the end of the period. That is, the occupancy by the communication messages of a period set from the start point of the measurement period G10 to a future point is calculated as the load factor. Thus, since the load factor is made 0% each time a measurement period G is started, there is timing at which transmission restriction is not performed. Also with respect to other measurement periods G11, G12 and G13, the load factor is 0% at the start of each measurement period, and the load factor is calculated by accumulating the time when communication messages flowed through the communication bus 50 in each measurement period.

Conventionally, in many cases, the average value of a range of a predetermined period before a measurement time point is calculated as the load factor. In this case, an average load factor is obtained at all times. For example, with the measurement period G10 shown in Fig. 5, a load factor of 100% is calculated at all times, making it difficult to ensure timing at which a communication message of low importance can be transmitted.

The prohibition determining section 127 compares the bus load factor and the upper limit value Tup. If the bus load factor is at or above the upper limit value Tup, the prohibition determining section 127 determines that the bus load factor is high (high load). If the bus load factor is below the upper limit value Tup, the prohibition determining section 127 determines that the bus load factor is low (low load) (a load determination step). When determining that the bus load factor is high, the prohibition determining section 127 outputs ON, which indicates that a transmission prohibition signal is valid (active). On the other hand, when determining that the bus load factor is low, OFF, which indicates that the transmission prohibition signal is invalid (negative) is output.

Then, in response to the transmission prohibition signal output from the prohibition determining section 127 being ON, the bus load measuring section 125 masks the transmission request flag setting bit of the CAN control register 124, i.e. validates the mask. When the mask is validated, if the CAN protocol engine 122 refers to the transmission request flag setting bit, it is as if the transmission stop flag 0 is set in the setting bit. Accordingly, if the mask is validated, the transmission stop flag 0 is read by the CAN protocol engine 122 even if the transmission request flag 1 is set in the transmission request flag setting bit. Then, a transmission request for a corresponding message box among the message boxes M1 to Mn is suspended at the CAN controller 12. On the other hand, the bus load measuring section 125 invalidates the mask of the transmission request flag setting bit of the CAN control register 124 in response to the transmission prohibition signal output from the prohibition determining section 127 being OFF. When the mask is invalid, the CAN protocol engine 122 can correctly read the transmission stop flag 0 or the transmission request flag 1 that is set in the transmission request flag setting bit. The transmission request flag 1 set in the transmission request flag setting bit is merely hidden when the mask is valid, and when the mask is invalidated, it is possible to refer to the transmission request flag 1 set in the transmission request flag setting bit. Accordingly, with respect to a message box for which the transmission request flag 1 is set while the mask is valid, the CAN protocol engine 122 can perform a transmission process based on the transmission request flag 1 when the mask is invalidated. In this manner, the CAN controller 12 is adapted to autonomously restrict transmission of communication messages according to the bus load factor (a transmission step).

Now, a case of initially setting various values related to transmission restriction at the bus load measurement register 128 and the CAN control register 124 will be described.

As shown in Fig. 4, at the first ECU 10, when power is turned on, initial setting related to the CPU or the clock of the information processor 11 is performed (step S10). The information processor 11 of the first ECU 10 is thereby activated. Then, at the first ECU 10, the application 111 is executed by the information processor 11, and initial setting by the application 111 is successively performed. That is, the executed application 111 sets a measurement period G for bus load measurement in the bus load measurement register 128 (step S11), and also, sets the upper limit value Tup, which is a threshold for bus load determination (step S12). Also, the executed application 111 sets 1 and 0, respectively for a case where the importance is high and where the importance is low, in the importance flag setting bits corresponding to the message boxes M1 to Mn of the CAN control register 124. That is, by setting 0, which indicates that the importance is low in an importance flag setting bit, the executed application 111 sets a message box for which transmission is prohibited when the bus load factor is high (step S13). Moreover, the executed application 111 performs various settings in each register of the CAN control register 124 with respect to the CAN protocol engine 122 (step S14), and also, performs various settings with respect to other functions (step S15). The initial setting is thereby ended.

Operation of the communication apparatus will be described with reference to Fig. 6.

As shown in Fig. 6, when a measurement period G1 is started, the bus load measuring section 125 calculates the bus load factor as 0%. Since the bus load factor is 0% at the time of start, the transmission prohibition signal is set to "OFF" in the measurement period G1, and the bus load measuring section 125 invalidates the masks of the transmission request flag setting bits corresponding to the first to the nth message boxes of the CAN control register 124. Thus, the CAN protocol engine 122 does not restrict transmission of communication messages generated based on the first to the nth message boxes M1 to Mn.

Then, the bus load measuring section 125 successively calculates the bus load factor of the measurement period G1. For example, in the measurement period G1, the number of communication messages that flow through the communication bus 50 is small, and thus, the measurement period G1 ends without the bus load factor reaching the upper limit value Tup, which is a threshold at which transmission is to be autonomously restricted.

When the measurement period G1 ends, a measurement period G2 is started.

When the measurement period G2 is started, the bus load measuring section 125 calculates the bus load factor from 0%. That is, the CAN protocol engine 122 does not restrict transmission of communication messages that are generated based on the first to the nth message boxes M1 to Mn.

Then, the bus load measuring section 125 successively calculates the bus load factor of the measurement period G2. Also in the measurement period G2, the number of communication messages that flow through the communication bus 50 is small, and thus, the measurement period G2 ends without the bus load factor reaching the upper limit value Tup.

When the measurement period G2 ends, a measurement period G3 is started.

When the measurement period G3 is started, the bus load measuring section 125 calculates the bus load factor from 0%. That is, the CAN protocol engine 122 does not restrict transmission of communication messages that are generated based on the first to the nth message boxes M1 to Mn.

Then, the bus load measuring section 125 successively calculates the bus load factor of the measurement period G3. In the measurement period G3, the number of communication messages that flow through the communication bus 50 is relatively large, and the bus load factor is greatly increased compared to the measurement periods G1 and G2, and reaches and exceeds the upper limit value Tup at a time point earlier than the end point of the measurement period G3 by a period G31. When the bus load factor reaches and exceeds the upper limit value Tup, the prohibition determining section 127 outputs, during the period G31 until the end of the measurement period G3, "ON" indicating that the transmission prohibition signal is valid. In response to the transmission prohibition signal becoming "ON", the bus load measuring section 125 changes the states of the masks of the transmission request flag setting bits for the second to the nth message boxes M2 to Mn, for which 0 is set for the importance flag setting bits, from invalid to valid. The CAN protocol engine 122 stops transmission of communication messages generated from data set in the second to the nth message boxes M2 to Mn, for which the masks are validated. That is, at the first ECU 10, during the period G31, transmission of communication messages generated based on the second to the nth message boxes M2 to Mn is restricted, i.e. prohibited. At this time, the mask of the transmission request flag setting bit corresponding to the first message box M1, for which 1 is set for the importance flag setting bit, remains invalid. Accordingly, the CAN protocol engine 122 continues, i.e. does not prohibit, transmission of communication messages generated based on the data set in the first message box M1, for which the mask is invalid, according to the setting of each flag of the transmission request flag setting bit. Moreover, since the bus load factor is not reduced until the measurement period G3 is ended, the transmission restriction based on the bus load factor continues until the measurement period G3 is ended, that is, during the period G31.

When the measurement period G3 ends, a measurement period G4 is started.

When the measurement period G4 is started, the bus load measuring section 125 calculates the bus load factor from 0%. Accordingly, in response to the transmission prohibition signal which was ON in the measurement period G3 returning to OFF, the bus load measuring section 125 invalidates the masks set for the second to the nth message boxes M2 to Mn. Thus, the CAN protocol engine 122 does not restrict transmission of communication messages that are generated based on the second to the nth message boxes M2 to Mn.

However, in the measurement period G4, the number of communication messages that flow through the communication bus 50 is relatively large, and the bus load factor is greatly increased compared to the measurement periods G1 and G2, and reaches and exceeds the upper limit value Tup at a time point earlier than the end of the measurement period G4 by a period G41. When the bus load factor reaches and exceeds the upper limit value Tup, the prohibition determining section 127 outputs, during the period G41 until the end of the measurement period G4, ON indicating that the transmission prohibition signal is valid. Then, the bus load measuring section 125 changes the states of the masks set for the second to the nth message boxes M2 to Mn, for which 0 is set for the importance flag setting bits, from invalid to valid. Then, at the first ECU 10, transmission of communication messages set for the second to the nth message boxes M2 to Mn with valid masks is restricted, i.e. prohibited. On the other hand, at the first ECU 10, transmission of communication messages set for the first message box M1 with an invalid mask is not prohibited because 1 is set for the importance flag setting bit. Moreover, since the bus load factor is not reduced until the measurement period G4 is ended, the transmission restriction based on the bus load factor continues until the measurement period G4 is ended, that is, during the period G41.

When the measurement period G4 ends, a measurement period G5 is started.

When the measurement period G5 is started, the bus load measuring section 125 calculates the bus load factor from 0%. Accordingly, in response to the transmission prohibition signal, which was ON in the measurement period G4, returning to OFF, the bus load measuring section 125 invalidates the masks set for the second to the nth message boxes M2 to Mn. Thus, the CAN protocol engine 122 does not restrict transmission of communication messages that are generated based on the second to the nth message boxes M2 to Mn.

Then, the bus load measuring section 125 successively calculates the bus load factor of the measurement period G5. Also in the measurement period G5, the number of communication messages that flow through the communication bus 50 is small, and thus, the measurement period G5 ends without the bus load factor reaching the upper limit value Tup.

In this manner, in each of the measurement periods G1 to G5, transmission restriction for communication messages is performed separately for each of the ECUs 10, 20 and 30 based on the bus load factors successively calculated based on the accumulated time of communication messages that flow through the communication bus 50.

As described above, the communication system including the communication apparatus according to the present embodiment achieves the advantages as listed below.

(1) Transmission of communication messages is restricted based on the bus load factor of the communication bus 50 in a measurement period G. That is, the CAN controller 12 can, for example, perform transmission restriction of restricting transmission of communication messages when the bus load factor of the communication bus 50 is high, and not restricting transmission of communication messages when the bus load factor of the communication bus 50 is low. Thus, by suppressing an increase in the communication traffic in an on-vehicle network, data collision, data delay and the like in the network are reduced. That is, appropriate transmission restriction for communication messages in accordance with the communication load of the network is easily performed.

Also, since the communication restriction is set for each of the CAN controllers 12, 22 and 32, messages that are the targets of restriction can be easily grasped. Also, communication restriction can be performed without taking into account the communication messages that are transmitted from other CAN controllers. Accordingly, the burden required for communication restriction is reduced.

Furthermore, since communication restriction is performed separately for the CAN controllers 12, 22 and 32, influence on other CAN controllers and the communication bus 50 is minimized. Thus, application to existing CAN controllers is easy, and also, existing CAN controllers and networks are not likely to be complicated and the costs thereof are not likely to be increased.

Also, by changing the setting of the unit of the measurement period used for calculation of the bus load factor, the communication load suitable for the network can be maintained, and also, a state where communication messages that are the targets of transmission restriction are appropriately transmitted can be selected.
(2) The bus load factor of a measurement period G is calculated based on the accumulated time of the communication messages that flow through. Accordingly, the level of transmission restriction for communication messages can be adjusted to be suitable for the state of the communication load of the communication bus 50 by selection of a measurement period G.
(3) The time during which communication messages are flowing is accumulated from zero for each measurement period G, and thus, the bus load factor is calculated in such a way as to be increased from zero in the measurement period G. Accordingly, a state where the bus load factor is low, including zero, is surely provided in the measurement period G, and there is timing within the measurement period G at which transmission restriction is not performed. Thus, since there is timing at which transmission restriction is not performed even for a communication message that is a target of transmission restriction, the influence of transmission restriction on communication messages that are targets of transmission restriction is suppresses at a low level.
(4) By setting the importance to various communication messages to be transmitted by the ECUs 10, 20 and 30 separately for each of the message boxes M1 to Mn, that is, on a message-by-message basis, whether a communication message is the target of transmission restriction or not can be determined for each communication message. According to the CAN protocol, the priority of a communication message is specified based on a message ID, but an ID with a low priority is possibly attached to a communication message of high importance depending on the design of the communication system or the like. For example, a communication apparatus that is added to an existing communication system does not have much flexibility regarding ID attachment; for example, a message ID that is already used cannot be used. Even in such a case, with the present ECU, transmission control is performed based on the importance set for the communication message, and the possibility of a communication message of high importance being transmitted can be increased.
(5) The level of the load of the communication bus 50 is calculated based on the comparison between the bus load factor and the upper limit value Tup. That is, the upper limit value Tup can be set based on the load factor, and thus, setting is facilitated.
(6) A measurement period G can be freely set between 5 milliseconds (ms) and 1 second (s), and thus, there is a high degree of flexibility in calculating the bus load factor. Accordingly, a measurement period G that is suitable for the load state of the communication bus 50 and the mode of the communication message which is a restriction target can be set.
(7) By applying such a communication restriction on a controller area network (CAN) often mounted in the vehicle 1, an increase in the communication messages is suppressed. Accordingly, the communication state of the communication system of the vehicle 1 can be suitably maintained, and the entire vehicle system can be prevented from being negatively affected.

### Other Embodiments

The embodiment described above may also be carried out in the following modes.

· In the embodiment described above, a case has been described where the bus load measuring section 125 accumulates, in real time, the communication messages successively flowing through the communication bus 50. However, this is not restrictive, and measurement of the bus load factor may be stopped when significant measurement of the bus load factor cannot be performed, such as when the ECU is in a sleep mode or in the case of bus-off. Flexibility in the design of such a communication apparatus is thereby increased.

· In the embodiment described above, a case has been described where the CAN controller 12 is provided with the transmission/reception circuit 121, the CAN protocol engine 122, the interface 123, the CAN control register 124, the bus load measuring section 125, and the bus load measurement register 128. However, this is not restrictive, and the arrangement, structures and the like of the transmission/reception circuit, the CAN protocol engine, the interface, the CAN control register, the bus load measuring section and the bus load measurement register may be arbitrarily designed without being limited to the embodiment described above as long as the CAN controller is capable of performing transmission restriction based on the bus load factor in a measurement period. Also, the CAN controller may be configured such that the functions are realized by one integrated circuit, or a plurality of integrated circuits may be used. Thus, flexibility in the design of the communication apparatus is increased.

· In the embodiment described above, a case has been described where each of the ECUs 10, 20 and 30 is provided with one CAN controller 12, 22 or 32. However, this is not restrictive, and an ECU may be provided with a plurality of CAN controllers.

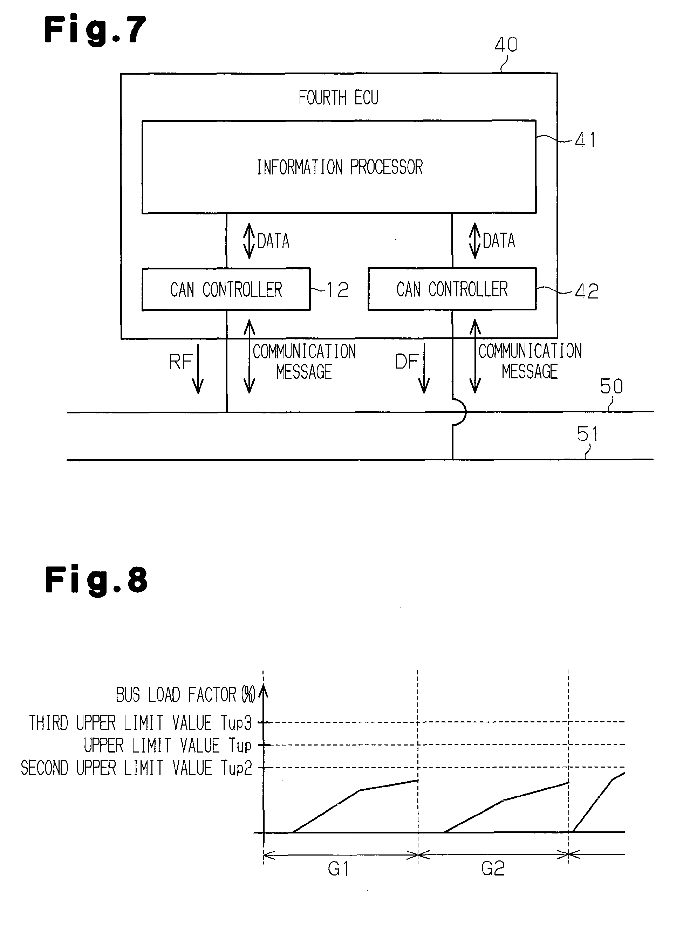

For example, as shown in Fig. 7, in the case where one ECU 40 includes a plurality of CAN controllers 12 and 42, which are connected to communication buses 50 and 51, respectively, the one ECU 40 may perform communication restriction on the plurality of communication buses 50 and 51 according to respective bus load factors. Thus, flexibility in the design of the communication system is increased by using this communication apparatus.

· In the embodiment described above, a case has been described where communication restriction is performed only when the upper limit value Tup is reached or exceeded. However, this is not restrictive, and a plurality of determination thresholds may be provided instead, and the content of communication restriction may be changed according to the determination level.

For example, as shown in Fig. 8, a second upper limit value Tup2 may be set at a bus load factor lower than the upper limit value Tup, and a third upper limit value Tup3 may be set at a bus load factor higher than the upper limit value Tup. A plurality of levels may thereby be provided for performing transmission restriction.

· In the embodiment described above, a case has been described where two levels of importance, high and low, are set for the communication messages. However, this is not restrictive, and more than two levels of importance may be set for the communication messages. For example, the importance may be divided into four levels of 1 to 4, and it is possible to not perform communication restriction for a communication message whose importance is 1, to perform communication restriction for a communication message whose importance is 2 at the third upper limit value Tup3 mentioned above, to perform communication restriction for a communication message whose importance is 3 at the upper limit value Tup of the embodiment described above, and to perform communication restriction for a communication message whose importance is 4 at the second upper limit value Tup2 mentioned above. Transmission restriction for the communication messages by this communication apparatus may thereby be performed more finely.

· In the embodiment described above, a case has been described where accumulation is made zero by the counter 126 for each measurement period G. However, this is not restrictive, and the counter may return the value to zero every several measurement periods, or may return the accumulation to a value other than zero. In any case, the bus load factor may be calculated in real time in such a way as to change from a low state to a high state. Thus, flexibility in the design of the communication apparatus is increased.

· In the embodiment described above, a case has been described where the counter 126 accumulate time of the communication messages. However, this is not restrictive, and the counter may accumulate the number of communication messages. In this case, the ratio of the number of accumulated messages to the number of communication messages by which the bus load factor in a measurement period is about 100% may be estimated to be the bus load factor to be used. Thus, flexibility in the design of the communication apparatus is increased.

· In the embodiment described above, a case has been described where the bus load factor is expressed in percentage, but this is not restrictive, and the bus load factor may be expressed in units other than percentage, such as in decimal form. Also, if the counter is capable of accumulating values according to detection of a communication message, it may be made to accumulate values obtained by applying predetermined arithmetic processing or the like on the time, the number or the like detected. Thus, flexibility in the design of the communication apparatus is increased.

· In the embodiment described above, a case has been described where respective CAN controllers 12, 22 and 32 of the ECUs 10, 20 and 30 are capable of performing transmission restriction based on the bus load factor. However, this is not restrictive, and one ECU provided with a communication apparatus capable of performing transmission restriction may be connected to the network, or two or more ECUs may be connected to the network. In either case, by the ECU performing transmission restriction on the traffic of communication messages that are to flow through the communication bus according to the bus load factor of the communication bus, an increase in the data traffic of the communication bus is suppressed.

That is, this transmission restriction can be applied to only the selected ECU. Thus, an ECU for which such transmission restriction is to be performed can be easily added to an existing communication system, and also, application to only a specific ECU provided in an existing communication system is facilitated. That is, even in a case of application to an existing communication system, a change to the communication system other than the ECU for which transmission restriction is to be performed can be minimized, and the applicability and flexibility in design is increased for the communication apparatus.

· In the embodiment described above, a case has been described where each of the ECUs 10, 20 and 30 is connected to the network. However, this is not restrictive, and a communication apparatus to be connected to the network may be other than the communication apparatus of the ECU, and may be a communication apparatus of the gateway or communication apparatuses of various other apparatuses. Accordingly, the communication apparatus can be applied to various apparatuses connected to the network to thereby suppress the communication traffic of data to be transmitted to the network.

· In the embodiment described above, a case has been described where the network is a network that is compatible with the CAN protocol, that is, a so-called CAN network. However, this is not restrictive, and the network may be a network other than the CAN network, such as the network of Ethernet (registered trademark) or FlexRay (registered trademark). Thus, the communication apparatus may be applied to various networks mounted in a vehicle to thereby suppress the communication traffic of data to be transmitted.

### DESCRIPTION OF THE REFERENCE NUMERALS

- 1: Vehicle
- 10: First ECU (Electronic control unit)
- 11: Information processor
- 12: CAN controller
- 12R: Reception buffer
- 12T: Transmission buffer
- 13: CAN transceiver
- 19: Serial communication bus
- 20: Second ECU
- 21: Information processor
- 22: CAN controller
- 30: Third ECU
- 31: Information processor
- 32: CAN controller
- 40: ECU
- 42: CAN controller
- 50, 51: Communication bus
- 111: Application
- 121: Transmission/reception circuit
- 122: CAN protocol engine
- 123: Interface
- 124: CAN control register
- 125: Bus load measuring section
- 126: Counter
- 127: Prohibition determining section
- 128: Bus load measurement register
- 211,311: Application
- M1 to Mn: First to nth message boxes
- RF: Communication message
- Rx: Reception port
- Tx: Transmission port

## Claims

1. A communication apparatus that is connected to an on-vehicle network and performs transmission and reception of a communication message to and from the network, the communication apparatus being **characterized by**:
a load measuring section that calculates a load factor of the network based on reception of the communication message flowing through the network during a measurement period set for calculation of the load factor;
a load determining section that determines a level of a load of the network based on the load factor calculated by the load measuring section; and
a transmitting section that is adapted to autonomously restrict the transmission of the communication message based on a determination result of the load determining section indicating a high load.

2. The communication apparatus according to claim 1, wherein the load measuring section is adapted to accumulate time during which the communication message flows through the network and calculate a ratio of the accumulated time to the measurement period as the load factor of the network.

3. The communication apparatus according to claim 2, wherein the load measuring section starts the accumulation of the time during which the communication message flows from zero each time the measurement period starts.

4. The communication apparatus according to any one of claims 1 to 3, wherein
a message of high importance and a message of low importance are each set as the communication message in the transmitting section, and
the transmitting section is adapted to autonomously restrict the transmission of the message of low importance.

5. The communication apparatus according to any one of claims 1 to 4, wherein
a determination threshold is set in the load determining section, and
the load determining section determines that a communication load of the network is high if the load factor is equal to or above the determination threshold, and determines that the communication load of the network is low if the load factor is below the determination threshold.

6. The communication apparatus according to any one of claims 1 to 5, wherein the measurement period is between 5 milliseconds (ms) and 1 second (s).

7. The communication apparatus according to any one of claims 1 to 6, wherein the network is a controller area network.

8. A communication method for performing transmission and reception of a communication message to and from an on-vehicle network, the communication method being **characterized by**:
a load measurement step for calculating a load factor of the network based on reception of the communication message flowing through the network during a measurement period set for calculation of the load factor;
a load determination step for determining a level of a load of the network based on the calculated load factor; and
a transmission step for restricting the transmission of the communication message based on a determination result of the load determination step indicating a high load.

9. The communication method according to claim 8, wherein the load measurement step includes
accumulating time during which the communication message flows through the network; and
calculating a ratio of the accumulated time to the measurement period as the load factor of the network.

10. The communication method according to claim 9, wherein the load measurement step includes starting the accumulation of the time during which the communication message flows from zero each time the measurement period starts.

11. The communication method according to any one of claims 8 to 10, wherein a message of high importance and a message of low importance are each set as the communication message, and the transmission step includes restricting the transmission of the message of low importance of the message of high importance and the message of low importance.

12. The communication method according to any one of claims 8 to 11, wherein
a determination threshold is set for the load determination step, and
the load determination step includes
determining that a communication load of the network is high if the load factor is equal to or above the determination threshold, and
determining that the communication load of the network is low if the load factor is below the determination threshold.
